# EUROPEAN PATENT APPLICATION

(11) **EP 2 187 300 A1**
(43) Date of publication of application: **19.05.2010**
(21) Application number: 09464002.6
(22) Date of filing: 10.04.2009
(51) Int. Cl.: G06F 3/048

(54) **Procedure and system of operator interaction with tactile surface computers**

(30) Priority: 17.11.2008 RO 200800893
(71) Applicant: S.C. Mighty Prod S.R.L., 200092 Judet Dolj (RO)
(72) Inventor: Mätusa, Remus-George, 200333 Judetul Dolj (RO); Mätusa, Tudor, 200341 Judetul Dolj (RO); Mätusa, Tudor T., 200432 Judetul Dolj (RO)

(57) **Abstract**

This invention is about a procedure and a system of operator interaction with tactile surface computers.

The procedure/ system outlined by this invention are applicable to process computers equipped with touch screens. The system of operator interaction with tactile surface computers supporting the interaction procedure is made up of a screen (1) with a tactile surface (2) that are both connected to a computer (3). Data about the fmger touching the tactile surface (2) is scanned by a controller (5), which sorts out any hesitating gestures and turns them into plane (x,y) coordinates, which are then conveyed to the computer (3). There they are then taken over by a unit of primary data analysis (8), which determines when one sequence of (x,y) coordinates ends and when the other begins, depending on the time interval between two successive coordinates. If a gesture (11) is identified, its code is generated and a corresponding command (7) is executed by an execution/command unit (9). The execution of command (7) will lead to a change in computer (3) reflected in changed data on screen (1) or in changes in other units (10).

## Description

This invention is about a procedure and a system of operator interaction with tactile surface computers.

The procedure and the system outlined by this invention regard process computers equipped with touch screens. Several such procedures and systems are known. A classical interaction system between the operator and a tactile surface computer consists of a set of virtual buttons. Each of these buttons is made up of a graphical sign displayed on the screen and a tactile area corresponding to the sign. When the operator touches the tactile area, the virtual button is activated and the corresponding command is executed.

Here are the disadvantages of the classical interaction system:
- Virtual buttons take up too much space, reducing the useful area assigned to essential computer values. The designing engineer has to balance the amount of space allowed for displaying essential data against the space allowed for interaction.
- Not all the tactile surface is put to use, some areas are never assigned to any virtual buttons.
- Intensive use of virtual button areas can shorten the lifespan of the tactile area;
- The operator has to remember the positions of the virtual buttons and, if these are numerous, he/she will waste a lot of time finding them. Moreover, if the computer screen changes size, the virtual buttons will be re-positioned and the operator will have to learn their positions all over again.

There are also other interaction systems based on tactile virtual buttons, as well as systems using physical buttons (placed on the side of the screen). Their disadvantges are as follows:
a) dependence on positions: the operator has to memorise the position of the buttons in order to be able to use them. Moreover, when system changes occur, when physical or virtual buttons are re-positioned or when screen size is different, the operator has to re-learn the new positions. It is hard for operators to suppress automatic gestures practised over long time, which is why they may press the wrong buttons for a while, before adapting to the new circumstances.
b) Whether interaction systems are based on physical buttons (placed on the side of the screen) or on virtual tactile buttons, the operator presses only those buttons, which leads to their faster wear and shortened lifespan.
c) In interaction systems using virtual buttons, the space these buttons take up is to the detriment of space needed for displaying essential values.
d) late operator response in systems based on physical or virtual buttons, because the operator needs to learn the exact positioning of the buttons. In the case of tactile surfaces that should be touched with several fingers, late operator response is caused by the higher complexity of the manner in which fingers are to be used.

The technical issue we are aiming to solve by this invention is how to achieve a fast ergonomic interaction between an operator and tactile surface process computers.

The solution is to allow the operator to perform natural gestures with one finger. According to the invention, the procedure is that the operator touches the tactile surface, makes the gesture, then lifts his finger. This is where the operator input stage ends.

The system behind the procedure consists of a screen with a tactile surface, which is connected to a computer. The data of the gesture made by the finger on the tactile surface are scanned by a controller, turned into plane coordinates and conveyed to the computer. The coordinates are taken over by an analysis unit, which determines when one sequence of coordinates ends and when the next one begins.

The procedure and system of operator interaction with tactile surface computers eliminates many disadvantages in that any area of the tactile surface can be used for input and the operator is asked to make natural gestures with one finger. The advantages of this procedure/ system are listed below:
- The gestures are natural, intuitive, easy to learn and to perform, since only one finger is used to make real-life gestures (like, for example, turning the pages of a book).
- Functions are activated in a rapid and ergonomic manner, as the operator need not remember any fixed positions on the tactile surface and its size is not important.
- No additional costs are required to integrate this system into an old-type system based on a tactile surface with virtual buttons.
- The display area is not filled with virtual buttons, so there is a larger useful area for displaying essential functions.
- It enhances the lifespan of the tactile surface, because all of it is used evenly. Moreover, faults in certain areas do not affect the overall functioning of the tactile surface, since gestures can be applied onto other areas that are in good condition or can even pass through faulty areas.

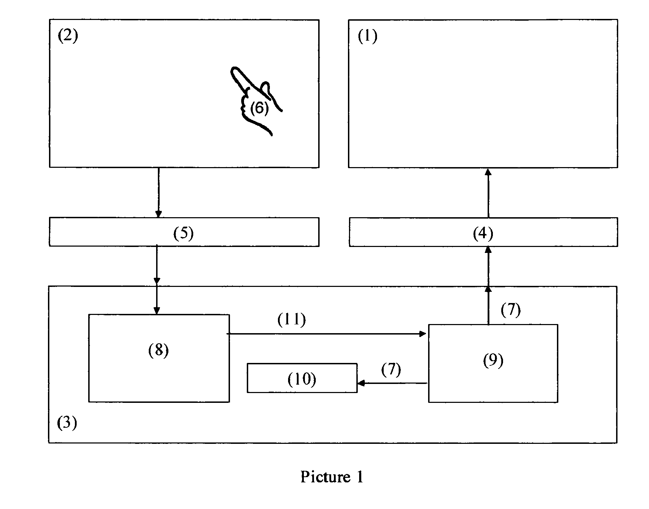

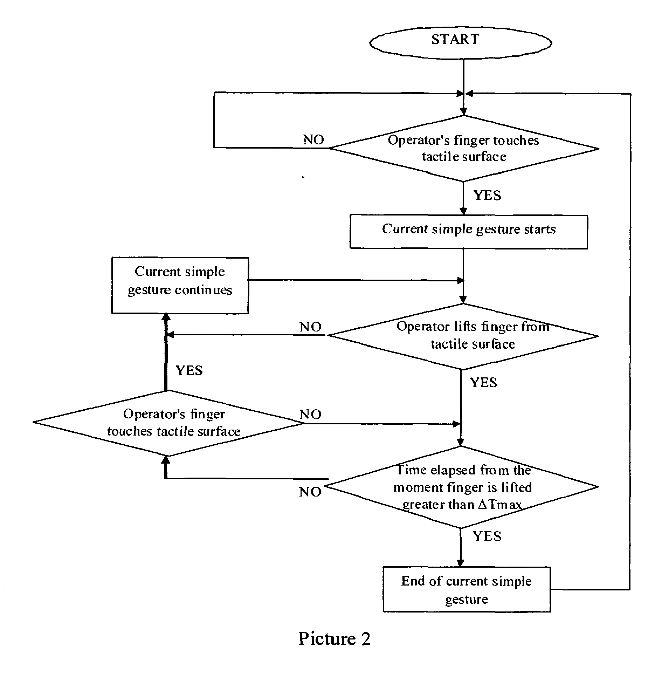

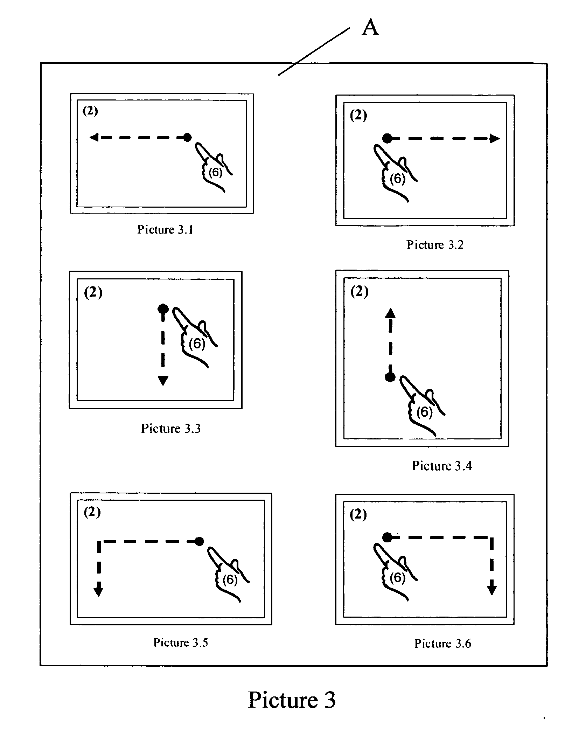

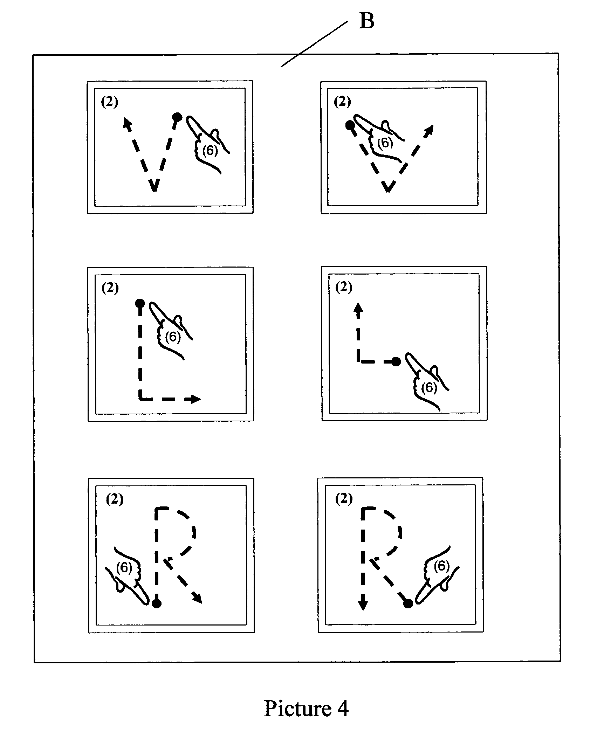

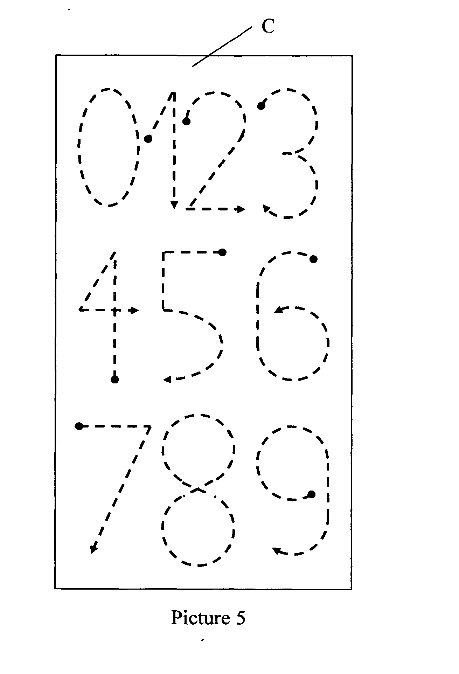

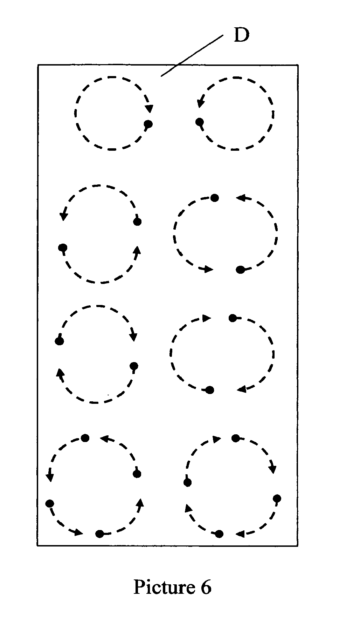

Below is an example of the way in which the procedure/ system can be implemented, as outlined in the accompanying pictures:
- picture 1: Flow chart of the system used for implementing the procedure.
- picture 2: Logical diagram of the procedure regarding the division of the primary information flow into blocks of information. Each information block corresponds to one gesture made by the operator.
- picture 3: (3.1, 3.2, 3.3, 3.4, 3.5, 3.6) Elementary Gestures - A
   • finger moves from right to left (picture 3.1): the main command associated with this gesture is that of passing on to the next page. If the current page is also the last page, the command means passing on to the first page. Additional commands can also be associated, such as, for example, moving to the left when viewing a map.
   • finger moves from left to right (picture 3.2): the main command associated with this gesture is that of passing on to the previous page. If the current page is also the first, the command means passing on to the last page. Additional commands can also be associated, such as, for example, moving to the right when viewing a map.
   • finger moves downwards (picture 3.3): the main command associated with this gesture is that of scrolling up a list. If the setting is that only one item will be displayed at a time, the command involves displaying the previous item in the list. If the setting is that several items are to be displayed at a time, the command involves displaying a previous group of items. Additional commands can also be associated, such as, for example, moving upwards when viewing a map.
   • finger moves upwards (picture 3.4): the main command associated with this gesture is that of scrolling down a list. If the setting is that only one item will be displayed at a time, the command involves displaying the next item in the list. If the setting is that several items are to be displayed at a time, the command involves displaying the next group of items. Additional commands can also be associated, such as, for example, moving downwards when viewing a map.
   • finger moves from right to left and then downwards (picture 3.5): the main command associated with this gesture is that of passing on to the first main page from whatever page we are in. Additional commands can also be associated, such as, for example, the zoom-out function when viewing a map.
   • finger moves from left to right and then downwards (picture 3.6): the main command associated with this gesture is that of passing on to the last main page from whatever page we are in. Additional commands can also be associated, such as, for example, the zoom-in function when viewing a map.
- picture 4 (4.1, 4.2, 4.3, 4.4, 4.5, 4.6) Alphabetical Gestures - B
   • finger draws letter "V": the main command associated with this gesture is that of displaying the secondary page for volume. As shown in the picture, the letter can be drawn starting from both left and right.
   • finger draws letter "L": the main command associated with this gesture is that of displaying the secondary page for luminosity. As shown in the picture, the letter can be drawn starting both from the top of letter "L" and from its lower part.
   • finger draws letter "R": the main command associated with this gesture is that of restarting/ resetting the computer.
- picture 5: Numerical Gestures - C
   • These gestures are about drawing figures 0 to 9 with one finger. If the operator makes several consecutive simple numerical gestures in close succession, these will make up a complex numerical gesture associated with the number resulting from the concatenated figures. The main command linked to these gestures is that of displaying the main pages corresponding to the numbers. These gestures secure the fastest type of access to the main pages.
- picture 6: Circular Gestures - D
   • These gestures are about the circular movement of the finger both clockwise and anti-clockwise, to draw a quarter of a circle, half a circle or a full circle. The main commands associated with these gestures are zoom-in and zoom-out in connection with a map. Thus, the anti-clockwise direction is for zoom-out and the clockwise direction for zoom-in. Zoom-in/-out levels are proportional to the length of the circular arc drawn by the operator: full circle - maximum zoom-in effect, half a circle - 50 % zoom-in effect, a quarter of a circle - 25 % zoom-in effect.

The system comprises a screen (1) with a tactile surface (2), which are both connected to a computer (3). Screen (1) is connected to the computer (3) by means of a graphic chip (4). Tactile surface (2) is connected to the computer (3) by means of a controller (5), through which the computer (3) gets primary data from the tactile surface (2) when the operator acts upon it with his finger (6), with the intention of giving a command (7). Tactile surface (2) may or may not coincide with the screen (1).

The flow of transmission and processing of data A, B, C, D within the system is as follows:
1. the operator places his finger (6) on tactile surface (2) and then moves it away;
2. data about the tactile surface being touched are scanned by controller (5), which sorts out any hesitating gestures. The data are then turned into (x,y) coordinates that are conveyed to computer (3);
3. After reaching computer (3), the data are taken over by the unit of primary data analysis (8). This unit receives the sequence of (x,y) coordinates and, on the basis of the time interval between two successive (x,y) coordinates, it determines when a sequence of (x,y) coordinates ends and when the next one begins. After that, each of these sequences are analysed to determine if they are valid gestures within the application.
4. When a gesture (11) is identified, its code is generated and, depending on the state of the system, the execution/ command unit (9) will execute corresponding command (7).
5. The execution of command (7) will lead to a change in computer (3), reflected in changed data on screen (1) or in changes in other units (10).

The graphic interface of the computer (3) is divided into pages, showing the elementary details of the essential values. These items are functionally grouped into pages. The pages can be main pages, showing essential values, or they can be secondary pages, on which adjustments can be made.

The screen (1) of computer (3) can display just one main page at a time. One or more secondary pages can be partially or totally superimposed on top of this main page.

The interaction procedure between an operator and a computer (3) with tactile surface (2) is this: the operator moves his finger (6) in gestures that are translated into commands, such as passing on to first or last page, passing on to next or previous page, bringing to the foreground a certain main page or secondary page, scrolling through a list, moving a map in various directions or zoom-in/out etc.

Any gesture starts when the operator touches tactile surface (2) with his finger (6). If the operator keeps his finger (6) on tactile surface (2), this means that a gesture is in progress. The shape of the gesture is determined by the movement made by the finger (6) on tactile surface (2). The current gesture is still considered to be in progress if the time interval between the moment the operator lifts his finger (6) from the tactile surface (2) and the next time he touches the tactile surface (2) with his finger (6) is less than a time interval, ΔTmax. A gesture has ended when the operator lifts his finger (6) from the tactile surface (2) for a time interval greater than ΔTmax. Time interval ΔTmax is used delimit the current gesture from the next one. In this way we can avoid errors owing to flaws of tactile surface (2) or to the fact that the operator may touch the tactile surface too lightly with his finger (6).

At the end of a gesture algorithm, data regarding the movement of the operator's finger (6) on tactile surface (2) is analysed to determine if the shape of the current gesture matches one of the gestures which the computer (3) acknowledges as valid. If gesture (11) is correct, corresponding command (7) is executed.

## Claims

1. A procedure of operator interaction with a tactile surface computer consisting of a series of stages:
- in the first stage, the operator's finger (6) touches a tactile surface (2);
- in the second stage, the operator makes gestures A, B, C, D;
- in the third stage the operator lifts his finger (6) from the tactile surface (2);
- in the fourth stage a comparison is made between the time elapsed from the last finger lift and ΔTₘₐₓ. and the current gesture may continue or not, depending on whether the elapsed time is less or greater than ΔT_{max.}
- in the fifth stage we have the end of the algorithm of breaking up the flow of primary data into a sequence of gestures and the current gesture is isolated.
- in the sixth stage the current gesture is analysed, validated if it was correctly performed and a corresponding gesture code (11) is generated;
- in the seventh stage we have the execution of command (7), corresponding to gesture (11) validated in the previous stage and to the current state of the computer (3).

2. A system of operator interaction with tactile surface computers which supports the above-mentioned procedure. The system consists of a screen (1) with a tactile surface (2) that are both connected to a computer (3). Data about the finger (6) touching tactile surface (2) are scanned by a controller (5), which sorts out the gestures and turns them into plane coordinates (x,y) that are subsequently conveyed to the computer (3), where they are taken over by the unit of primary data analysis (8). Depending on the time interval between two successive (x,y) coordinates, this unit determines when one sequence of (x,y) coordinates ends and when the next one begins. If a gesture (11) is identified, its code is generated and corresponding command (7) is executed by the execution/ command unit (9). The execution of command (7) will lead to a change in computer (3), reflected in changed data on screen (1) or in changes in other units (10).

## Amended claims

### Amended claims in accordance with Rule 137(2) EPC.

**1.** A procedure of interaction between an operator and touch surface computers, **characterized by**:
a) Detecting and identifying one of the gestures A, B, C, or D made by an operator on the touch surface of a computer data input device, and
b) Converting the gesture into a command that results in changes on the computer display or in changes to computer units.

**2.** A system of operator interaction with touch surface computers which supports the above-mentioned procedure. The system consists of a display (1) with a touch surface (2) that are both connected to a computer (3). Input data from an operator (6) on the touch surface (2) are scanned by a controller (5) and processed by a unit of data analysis (8). If a gesture (11) is identified, the execution unit (9) runs its corresponding command (7) that reflects into changes on the computer display (1) or other computer units (10).
